# EUROPÄISCHE PATENTANMELDUNG

(11) **EP 2 110 194 A2**
(43) Veröffentlichungstag der Anmeldung: **21.10.2009**
(21) Anmeldenummer: 09000817.8
(22) Anmeldetag: 21.01.2009
(51) Int. Cl.: B23D 61/12, B27B 21/04

(54) **Sägeblatt und Handsäge**

(30) Priorität: 14.04.2008 DE 102008018676
(71) Anmelder: Irwin Industrial Tools GmbH, 85399 Hallbergmoos (DE)
(72) Erfinder: Pedersen, Hans, 7760 Hurup (DK); Field, Robert, 81679 München (DE); Metcalfe, Nick, 81249 München (DE); Geier, Manfred, 82178 Puchheim (DE)
(74) Vertreter: Schmid, Nils T.F.

(57) **Zusammenfassung**

Bei einem Sägeblatt (11) für eine Handsäge (1) mit einem Handgriff (3), das zwei sich gegenüberliegende Seitenflächen, die zwei zueinander parallele Ebenen definieren und in einen freien Längsrand mit einer daran ausgebildeten Sägezahnreihe (13) münden, und eine über dessen blattgemäße, flächige Ausdehnung im wesentlichen gleichmäßige Stärke aufweist, ist vorgesehen, dass das Sägeblatt (11) abschnittsweise mit wenigstens einer Profilierung versehen ist, die durch eine Erhebung und/oder Vertiefung geformt ist, welche aus der jeweiligen Ebene der Seitenflächen vorsteht.

## Beschreibung

Die Erfindung betrifft ein Sägeblatt einer Handsäge, welche üblicherweise über einen Handgriff erfaßt und betätigt werden kann.

Es ist bekannt, das Sägeblatt als Metallplatte auszuführen, an dessen freien Längsseite eine Sägezahnreihe eingefräst oder eingeschliffen ist. Üblicherweise erstreckt sich die Sägezahnreihe kontinuierlich und geradlinig in einer Längsrichtung der Handsäge. Die Handsäge wird in der Längsrichtung vorgeschoben und zurückgezogen, damit durch den Eingriff der Sägezähne in das zu bearbeitende Werkstück Werkstückmaterial abgetragen und ausgeräumt wird. An einem der schmalen Enden des Sägeblatts ist der Handgriff befestigt, der beispielsweise aus Holz oder zur Reduzierung der Fertigungskosten und des Gewichts der Handsäge aus Kunststoff gebildet sein kann.

Beim Sägevorgang wird in dem Werkstück eine geradlinige Schnittfuge durch die Sägezahnreihe freigeräumt, die seitlich von flachen, parallelen Innenwänden begrenzt ist. Je fortgeschrittener der Sägevorgang ist, desto größer werden Reibungs- und Führungskräfte, die sich zwischen den beiden Seitenflächen des Sägeblattes und den zugeordneten stetig wachsenden Innenwänden der Schnittfuge ergeben.

Um insbesondere einen stabilen Sägevorgang beim Vorschieben der Säge zu erhalten und ein Einknicken zu verhindern, ist das Sägeblatt ausreichend stark und damit schwer ausgeführt.

Es ist Aufgabe der Erfindung, die Nachteile des Stands der Technik zu überwinden, insbesondere eine ergonomisch einfach zu bedienende, formstabile Handsäge geringeren Gewichts zu schaffen, welche kostengünstig in der Herstellung ist.

Diese Aufgabe wird durch die Merkmale von Anspruch 1 gelöst.

Das erfindungsgemäße Sägeblatt hat über dessen blattgemäße Ausdehnung im wesentlichen eine gleichmäßige Stärke. Erfindungsgemäß hat das Sägeblatt zwei sich gegenüberliegende Seitenflächen, die zwei zueinander parallele Ebenen definieren und in einen freien Längsrand mit einer daran ausgebildeten Sägezahnreihe münden. Das Sägeblatt hat eine über dessen blattgemäße flächige Ausdehnung im wesentlichen gleichmäßige Stärke. Erfindungsgemäß soll das Sägeblatt abschnittsweise mit wenigstens einer Profilierung versehen sein, die durch eine Erhebung und/oder Vertiefung geformt ist, welche aus der jeweiligen Ebene der Seitenflächen vorsteht. Beispielsweise kann als an dem Sägeblatt eine aus der seitlichen Grundfläche des Sägeblatts erhebende Profilrippe insbesondere mit einer zumindest abschnittsweisen überwiegend parallel zur Sägezahnreihe ausgerichteten Längserstreckungsrichtung vorzugsweise spanlos eingeformt sein. Mit der erfindungsgemäßen Maßnahme des Vorsehens einer erhabenen Profilrippe in Längsrichtung des Sägeblatts wird es möglich, die Sägeblattstärke deutlich zu reduzieren, wodurch sowohl Materialkosten eingespart und das Gewicht der Handsäge deutlich gesenkt werden können, ohne daß Einbußen bei der Formsteifigkeit des Sägeblatts hingenommen werden müßte. Überraschenderweise zeigte sich, daß mittels Vorsehens wenigstens einer Profilrippe, insbesondere mehrerer Profilrippen, die Betätigungskraft für die Hin- und Herbewegung der Hartsäge verringert werden kann. Die eingeformte, gegenüber der Blattgrundfläche des Sägeblatts erhabene Profilrippe reduziert die effektive Kontaktfläche zwischen dem Sägeblatt und dem zu sägenden Werkstück an den Innenwänden der Schnittfuge, wodurch weniger Reibungskräfte überwunden werden müssen und einer frühzeitigen Ermüdung der die Handsäge verwendeten Bedienperson entgegengewirkt wird.

Bei einer bevorzugten Ausführung der Erfindung hat das Sägeblatt an der wenigstens einen Profilrippe die gleiche Blattstärke wie an Blattabschnitten ohne Profilrippe. Beim Umformen des Sägeblatts wird darauf geachtet, daß durch das spanlose Umformen die Blattstärke im Bereich des umgeformten Blattmaterials im wesentlichen nicht geändert wird.

Es sei insbesondere klar, dass vorzugsweise der überwiegende Teil des Sägeblatts profilierungsfrei gebildet ist.

Bei einer bevorzugten Ausführung der Erfindung ist die wenigstens eine Profilierung durch mehrere separate Profileinheiten gleicher Profilform gebildet. Bei einer Weiterbildung der Erfindung ist die wenigstens eine Profilierung durch mehrere Profilringe gebildet, die insbesondere jeweils durch eine in das Sägeblatt eingebrachte ringförmige Prägung realisiert ist.

Vorzugsweise sind die mehreren Ringprofile in Reihen, insbesondere mehr als drei Profilringreihen, von mehr als drei Profilringen gruppiert. Die Reihen können parallel zur Sägezahnreihe angeordnet sein.

Bei einer bevorzugten Ausführung der Erfindung ist die wenigstens eine Profilierung durch eine Profilrippe insbesondere mit einer zumindest abschnittsweise im Wesentlichen parallel zur Sägezahnreihe ausgerichteten Längserstreckungsrichtung in dem Sägeblatt ausgebildet. Vorzugsweise ist das Sägeblatt an der wenigstens einen Profilrippe mit der identischen Blattstärke wie an Blattabschnitten ohne Profilrippe ausgeführt.

Vorzugsweise ist die wenigstens eine Profilrippe in das Sägeblatt eingeprägt.

Bei einer bevorzugten Ausführung der Erfindung ist die wenigstens eine Profilrippe eine geschlossene Ringstruktur, die insbesondere kreisförmig sein kann.

Alternativ oder zusätzlich können die mehreren Profilrippen geradlinig geformt sein, die insbesondere zur Bildung eines Mehrecks, vorzugsweise eines Dreiecks, positioniert sein können. Es sei klar, dass mehrere geradlinige Profilrippen mehrere Dreiecke definieren, die fachwerkartig zueinander angeordnet sind.

Vorzugsweise münden die geradlinigen Profilrippen an deren Enden zur Bildung eines kontinuierlichen Übergangs ineinander.

Vorzugsweise weist die in benachbarten Dreiecken positionierte Anordnung jeweils eine zueinander parallele Seite auf. Die dreieckigen Profilrippenanordnungen sind in einem gleichmäßigen Abstand zueinander angeordnet.

Bei einer bevorzugten Ausführung der Erfindung sind benachbarte, dreieckige Profilrippenanordnungen vorgesehen, die jeweils eine zueinander parallele Dreiecksseite aufweisen.

Vorzugsweise können dreieckige Profilrippenanordnungen in einem gleichbleibenden Abstand zueinander angeordnet sein.

Bei einer Weiterbildung der Erfindung hat die wenigstens eine Profilrippe im Querschnitt im wesentlichen eine Wellen- und/oder Stufenform. Die Wellenform kann wenigstens eine seitliche sich über eine Grundflächenebene des Sägeblatts hinaus in Stärkenrichtung des Sägeblatts erstreckende Erhebung aufweisen. Vorzugsweise hat die Wellenform auf beiden Flächenseiten des Sägeblatts eine Erhebung. Dabei bildet eine der Erhebungen auf einer Flächenseite des Sägeblatts ein Wellental auf der anderen Flächenseite.

Es sei klar, daß eine Längserstreckung der wenigstens einen Profilrippe im wesentlichen parallel oder genau parallel zu der Sägezahnreihe ausgerichtet sein kann.

Bei einer Weiterbildung der Erfindung ist die wenigstens eine Profilrippe gegenüber der Sägezahnreihe derart insbesondere leicht geneigt, daß sie sich im Verlauf zu einem dem Handgriff gegenüberliegenden freien Ende des Sägeblatts der Sägezahnreihe nähert oder entfernt. Mit Hilfe der Neigung der Profilrippen relativ zur Sägezahnreihe wird es möglich, beim Vorschub oder Rückzug der Handsäge zusätzliche Vertikalkraftkomponenten, die lotrecht zur Sägezahnreihe wirken, zu erzeugen, was den Eingriff der Sägezähne in das Werkstück verstärken und das Befreien der Sägezähne aus dem Werkstück unterstützen kann. Dabei ist es die Neigungsrichtung der Profilrippe, die festlegt, ob ein Eingriff der Sägezähne in das Werkstück beim Ziehen oder beim Drücken der Handsäge erreicht wird. Sollte sich die Profilrippe im Verlauf zum freien Ende des Sägeblatts der Sägezahnreihe nähern, so ist eine Vertikaldruckerhöhung beim Vorschub der Handsäge erreicht, sollte sich die Profilrippe im Verlauf zum freien Ende des Sägeblatts von der Sägezahnreihe entfernen, so wird die vertikale Andrückkraft der Handsäge beim Zurückziehen der Handsäge erhöht.

Bei einer Weiterbildung der Erfindung ist die wenigstens eine Profilrippe gegenüber der Sägezahnreihe in einem Winkel von weniger 10°, insbesondere 5°, geneigt.

Bei einer bevorzugten Ausführung der Erfindung erstreckt sich die wenigstens eine Profilrippe im wesentlichen geradlinig von einem Sägeblattrand zu einem gegenüberliegenden Sägeblattrand. Dabei kann die wenigstens eine Profilrippe in die jeweiligen Sägeblattränder münden oder in einem Abstand dazu enden. Letztere Ausführung ist insofern dann von Vorteil, wenn ein besonders steifes Sägeblatt erzielt werden soll.

Bei einer Weiterbildung der Erfindung sind mehrere, insbesondere zwei bis zehn, vorzugsweise fünf oder sechs, zueinander parallele Profilrippen an dem Sägeblatt vorzusehen. Die Profilrippen können in einem gleichen Parallelabstand zueinander angeordnet sein.

Bei einer Weiterbildung der Erfindung sind auf einer zur Sägeblattreihe parallelen oder leicht geneigten Geraden mehrere in Reihe und in einem Längsabstand zueinander angeordnete Profilrippenabschnitte vorgesehen. Die Profilrippenabschnitte sind in deren Längsrichtung hintereinander angeordnet, um die Profilrippenreihe zu bilden.

Dabei kann ein Versatz einer Profilrippenreihe zur Benachbarten in Längsrichtung im wesentlichen weniger als die Hälfte einer Profilrippenabschnittslänge sein.

Vorzugsweise ist die wenigstens eine Profilrippe abschnittsweise geradlinig und/oder leicht gekrümmt. Durch die Krümmung der Profilrippe wird eine allmähliche Zunahme des Anpreßdrucks in das Werkstück oder der Anhebekraft beim Vorschub oder Zurückziehen des Sägeblatts erreicht.

Bei einer bevorzugten Ausführung der Erfindung hat die wenigstens eine Profilrippe einen ersten Abschnitt und einen zweiten, in den ersten Abschnitt insbesondere kontinuierlich übergehenden Abschnitt, der gegenüber dem ersten Abschnitt geneigt ist. Dabei kann der erste Abschnitt im wesentlichen parallel zur Sägezahnreihe verlaufen und wenigstens doppelt so lang wie der zweite Abschnitt sein.

Bei einer bevorzugten Ausführung der Erfindung ist ein Neigungswinkel zwischen dem ersten und dem zweiten Abschnitt kleiner als 45°, vorzugsweise 30°.

Vorzugsweise ist die Breite der Sägezahnreihe größer als die Blattstärke des Sägeblatts. Dies kann dadurch erreicht werden, daß die Sägezahnreihenwurzel verstärkt ist oder einzelne Sägezähne geschränkt sind, die aus der Sägezahnreihe seitlich ausragen. Dabei ist zu beachten, daß die Breite der Sägezahnreihe geringfügig größer als die maximale fiktive Ausdehnung des Sägeblatts aufgrund der seitlich vorstehenden Profilrippen in Stärkenrichtung ist.

Die Erfindung betrifft ebenfalls eine Handsäge mit einem an dem Handgriff befestigten, erfindungsgemäßen Sägeblatt.

Weitere Eigenschaften, Vorteile und Merkmale der Erfindung werden durch die folgende Beschreibung bevorzugter Ausführungen der Erfindung anhand der beiliegenden Zeichnungen deutlich, in denen zeigen:
- Figur 1a: eine Seitenansicht einer bevorzugten Ausführung einer erfindungsgemäßen Handsäge;
- Figur 1b: eine Querschnittsansicht eines Sägeblatts der Handsäge gemäß Figur 1 a entlang der Schnittlinie B-B;
- Figur 1c: eine vergrößerte Seitenansicht eines freien Endbereichs der erfindungsgemäßen Handsäge gemäß Figur 1a;
- Figur 1d: ein vergrößerter Detailausschnitt D gemäß den Figuren 1b und 1c.
- Figur 2a: eine Seitenansicht einer bevorzugten Ausführung einer erfindungsgemäßen Handsäge;
- Figur 2b: eine Querschnittsansicht eines Sägeblatts der Handsäge gemäß Figur 2a entlang der Schnittlinie B-B;
- Figur 2c: eine vergrößerte Seitenansicht eines freien Endbereichs der erfindungsgemäßen Handsäge gemäß Figur 2a;
- Figur 2d: ein vergrößerter Detailausschnitt D gemäß den Figuren 2b und 2c.
- Figur 3a: eine Seitenansicht einer bevorzugten Ausführung einer erfindungsgemäßen Handsäge;
- Figur 3b: eine Querschnittsansicht eines Sägeblatts der Handsäge gemäß Figur 3a entlang der Schnittlinie B-B;
- Figur 3c: eine vergrößerte Seitenansicht eines freien Endbereichs der erfindungsgemäßen Handsäge gemäß Figur 3a;
- Figur 3d: ein vergrößerter Detailausschnitt D gemäß den Figuren 3b und 3c
- Figur 4a: eine Seitenansicht einer weiteren bevorzugten Ausführung einer erfindungsgemäßen Handsäge;
- Figur 4b: eine Querschnittsansicht eines Sägeblatts der Handsäge gemäß Figur 4a entlang der Schnittlinie B-B;
- Figur 4c: eine vergrößerte Seitenansicht eines freien Endbereichs der erfindungsgemäßen Handsäge gemäß Figur 4a;
- Figur 4d: ein vergrößerter Detailausschnitt D gemäß den Figuren 4b und 4c.
- Figur 5a: eine Seitenansicht einer bevorzugten Ausführung einer erfindungsgemäßen Handsäge;
- Figur 5b: eine Querschnittsansicht eines Sägeblatts der Handsäge gemäß Figur 5a entlang der Schnittlinie B-B;
- Figur 5c: eine vergrößerte Seitenansicht eines freien Endbereichs der erfindungsgemäßen Handsäge gemäß Figur 5a;
- Figur 5d: ein vergrößerter Detailausschnitt D gemäß den Figuren 5b und 5c.
- Figur 6a: eine Seitenansicht einer bevorzugten Ausführung einer erfindungsgemäßen Handsäge;
- Figur 6b: eine Querschnittsansicht eines Sägeblatts der Handsäge gemäß Figur 6a entlang der Schnittlinie B-B;
- Figur 6c: eine vergrößerte Seitenansicht eines freien Endbereichs der erfindungsgemäßen Handsäge gemäß Figur 6a;
- Figur 6d: ein vergrößerter Detailausschnitt D gemäß den Figuren 6b und 6c.
- Figur 7a: eine Seitenansicht einer bevorzugten Ausführung einer erfindungsgemäßen Handsäge;
- Figur 7b: eine Querschnittsansicht eines Sägeblatts der Handsäge gemäß Figur 7a entlang der Schnittlinie B-B;
- Figur 7c: eine vergrößerte Seitenansicht eines freien Endbereichs der erfindungsgemäßen Handsäge gemäß Figur 7a;
- Figur 7d: ein vergrößerter Detailausschnitt D gemäß den Figuren 7b und 7c.
- Figur 8a: eine Seitenansicht einer bevorzugten Ausführung einer erfindungsgemäßen Handsäge;
- Figur 8b: eine Querschnittsansicht eines Sägeblatts der Handsäge gemäß Figur 8a entlang der Schnittlinie B-B;
- Figur 8c: eine vergrößerte Seitenansicht eines freien Endbereichs der erfindungsgemäßen Handsäge gemäß Figur 8a;
- Figur 8d: ein vergrößerter Detailausschnitt D gemäß den Figuren 8b und 8c;
- Figur 9: eine Seitenansicht einer weiteren bevorzugten Ausführung einer erfindungsgemäßen Handsäge mit drei dreieckigen Profilrippenanordnungen;
- Figur 10: eine Seitenansicht einer weiteren bevorzugten Ausführung der erfindungsgemäßen Handsäge mit sieben dreieckigen Profilrippenanordnungen;
- Figur 11: eine Seitenansicht einer weiteren bevorzugten Ausführung der erfindungsgemäßen Handsäge mit sechs dreieckigen Profilrippenanordnungen;
- Figur 12: eine Seitenansicht einer weiteren bevorzugten Ausführung der erfindungsgemäßen Handsäge, bei der mehrere Profilrippen zu Buchstabenformen angeordnet sind; und
- Figur 13: eine Seitenansicht einer weiteren bevorzugten Ausführung der erfindungsgemäßen Handsäge mit mehreren Profilringen.

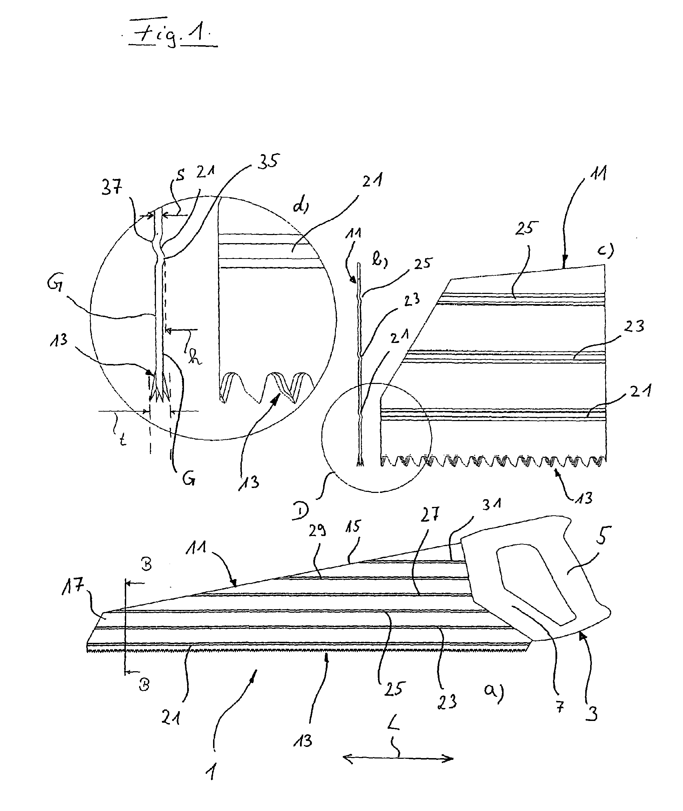

In Figur 1 ist eine erste bevorzugte Ausführung der erfindungsgemäßen Handsäge im allgemeinen mit der Bezugziffer 1 versehen. Die erfindungsgemäße Handsäge 1 besteht im wesentlichen aus zwei Hauptbestandteilen, nämlich einem im wesentlichen ringförmigen Handgriff mit einem Griffabschnitt 5 und einem Montageabschnitt 7 sowie einem an dem Montageabschnitt 7 des Handgriffs 3 befestigten Sägeblatt 11.

Das Sägeblatt 11 erstreckt sich in einer Längsrichtung L, in der die Handsäge 1 vor und zurück getrieben wird, um ein nicht dargestelltes Werkstück zu sägen. Dafür hat das Sägeblatt 11 an deren Längsseite eine geradlinige Sägezahnreihe 13, die aus einer Vielzahl im wesentlichen identisch geformter Sägezähne mit einigen geschränkten Zähnen zum Schaffen eines breiteren Schnittfugenfreigangs gebildet ist. Der Sägezahnreihe 13 liegt einer dazu schrägen Längsseite 15 gegenüber, die ebenfalls gerade ist, wobei die beiden Längsseiten 13, 15 aufeinanderzu laufen und in einen Endbereich 17 münden.

In dem Sägeblatt 11 gemäß den Figuren 1a bis 1d sind mehrere, sich parallel zur Sägezahnreihe 13 erstreckende Profilrippen 21, 23, 25, 27, 29, 31 vorgesehen, welche zueinander in einem gleichmäßigen Parallelabstand angeordnet sind. Jede der Profilrippen 21 bis 31 ist in das Sägeblatt 11 derart eingeprägt, daß die Querschnittsstärke s des Sägeblatts 11 im geprägten Profilrippenbereich etwa gleich der der ungeprägten Sägeblattzonen ist.

Wie insbesondere in den Figuren 1a und 1d ersichtlich ist, hat die Profilrippe 21 im Querschnitt eine Wellenform mit einem Wellental 35 und einem Wellenberg 37, wobei sich der Wellenberg 37 und das Wellental 35 jeweils in eine Höhe h von der jeweiligen seitlichen Grundflächenebene G des Sägeblatts 11 abhebt. Auf diese Weise bildet das Sägeblatt 11 eine fiktive Stärke von der jeweiligen Sägeblattstärke s plus zwei mal der Wellenhöhe h.

Es sei angemerkt, daß die fiktive Stärke des Sägeblatts 11 geringfügig kleiner als die Breite einer in dem Werkstück eingebrachten Schnittfuge ist, die etwa der Breite t der Sägezahnreihe 13 entspricht.

In Figur 1 sind sechs zueinander parallele Profilrippen 21 bis 31 vorgesehen, die zumindest an dem von dem Handgriff 3 abgewandten Endrand des Sägeblatts 11 münden.

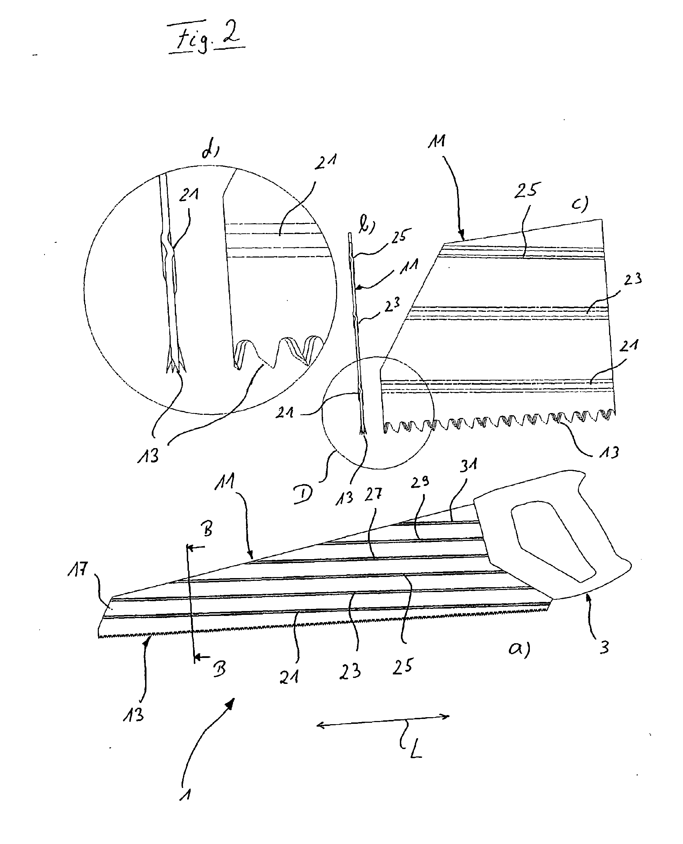

In den folgenden Figuren 2 bis 8 sind weitere Ausführungen des erfindungsgemäßen Sägeblatts 11 dargestellt, wobei zur besseren Lesbarkeit der Figurenbeschreibung für die gleichen Bestandteile oder Bauteile der Handsäge 1 dieselben Bezugsziffern wie in den Figuren 1a bis 1d verwendet werden.

Die Handsäge 1 gemäß Figur 2 unterscheidet sich von der gemäß Figur 1 dadurch, daß die Profilrippen 21 bis 31 gegenüber der sich in Längsrichtung L erstreckenden Zahnreihe 13 in einem Winkel von weniger als 10° geneigt sind. Dabei ist die Neigung der Profilrippen 21 bis 31 derart festgelegt, daß sich die Profilrippen 21 bis 31 im Verlauf des Sägeblatts 11 hin zum freien Endabschnitt 17 von der Sägezahnreihe 13 entfernen.

Auf diese Weise wird erreicht, daß sich beim Vorschieben der Handsäge 1 der Eingriff der Sägezähne mit dem Werkstück leichter lösen läßt, während beim Ziehen der Handsäge zusätzliche Vertikalkräfte in das Werkstück eingeleitet werden können. Diese zusätzlichen Löse- und Lastkräfte werden dadurch erzeugt, daß beim Reibkontakt zwischen den Seitenflächen, dem Sägeblatt11 und den ortsfesten Innenwänden der Schnittfuge (nicht dargestellt) die geneigten Profilrippen 21, 31 entsprechend in Kontakt kommen und je nach Betätigungsrichtung eine Kraftkomponente nach oben oder nach unten der Handsäge 1 mitnehmend mitteilen.

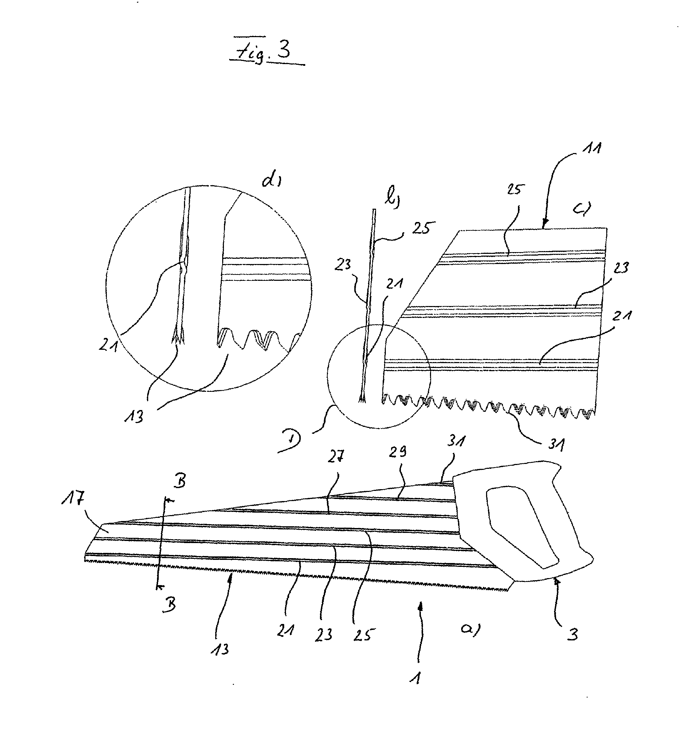

Die in Figur 3 gezeigte dritte Ausführung der erfindungsgemäßen Handsäge 1 unterscheidet sich von der gemäß Figur 2 dadurch, daß eine entgegengesetzte Neigung der Profilrippen 21 bis 31 vorgesehen ist, so daß beim Vorschieben der Handsäge in Längsrichtung L zusätzliche vertikale Eingreifkräfte hin zum Werkstück erzeugt werden, während beim Zurückziehen vertikale Lösungskräfte auf die Handsäge 1 wirken.

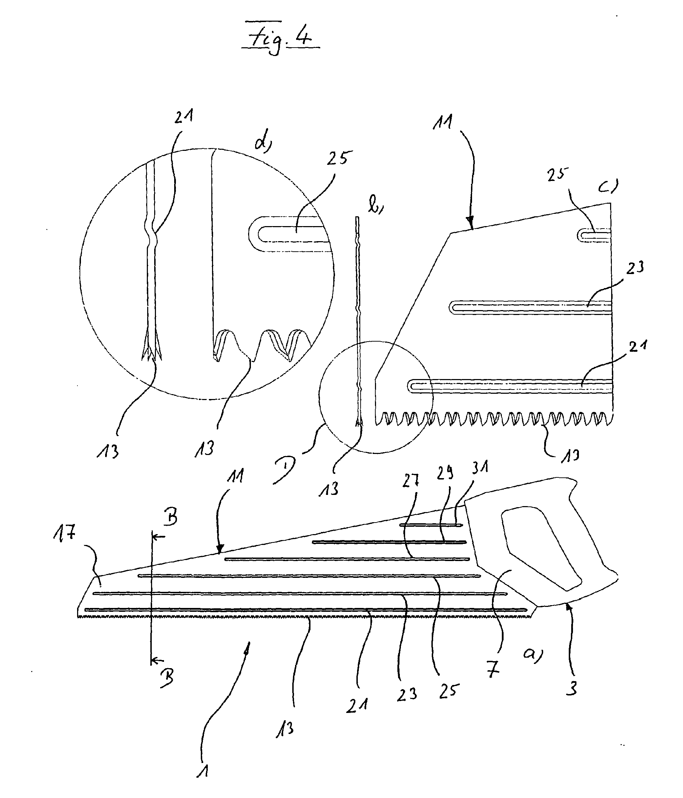

Die in Figur 4 dargestellte vierte alternative Ausführung der erfindungsgemäßen Handsäge 1 unterscheidet sich von der gemäß Figur 1 dadurch, daß die sechs Profilrippen 21 bis 31 nicht in den vom Handgriff 3 abgewandten Endrand münden, sondern mit einem Abstand davon enden. Die Profilrippen 21, 31 sind gegenüber der Zahnreihe 13 nicht geneigt und enden auch in einem Abstand zum Montageabschnitt 7 des Handgriffs 3.

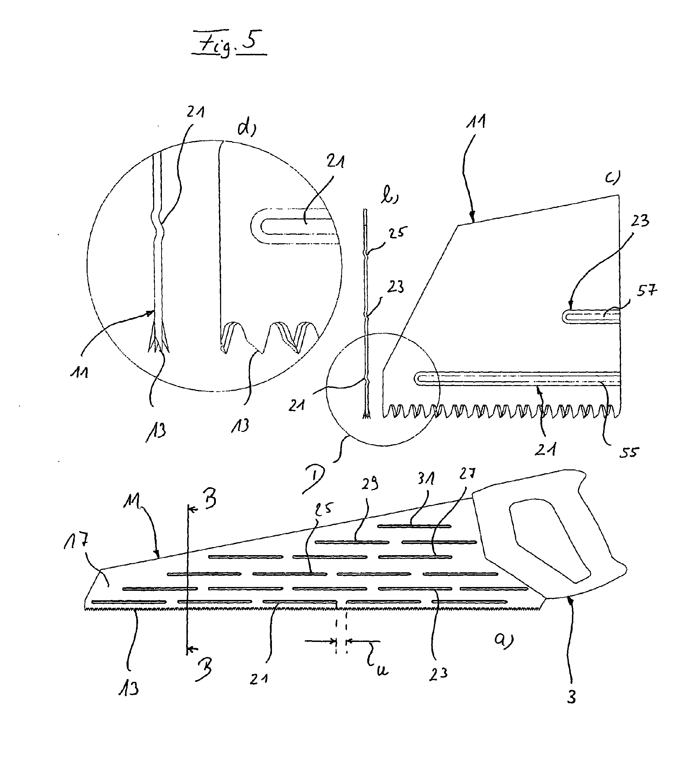

Die in Figur 5 dargestellte erfindungsgemäße fünfte alternative Ausführung der Handsäge 1 unterscheidet sich von der gemäß Figur 4 dadurch, daß die Profilrippen 21 bis 31 in in einer Reihe zueinander angeordnete, voneinander profilgetrennte Profilrippenabschnitte 55, 57 aufgeteilt sind, die in einem gleichmäßigen Längsabstand zueinander liegen, der deutlich kleiner als die Länge eines einzelnen Profilrippenabschnitts ist. Für die Profilrippe 21 sind sechs Abschnitte vorgesehen, während für die benachbarte Profilrippe 23 fünf Profilrippenabschnitte 55, 57 vorgesehen sind. Die Profilrippe 25 hat vier Abschnitte, während die Profilrippe 27 drei und die Profilrippe 29 zwei und die Profilrippe 31 einen Abschnitt aufweisen.

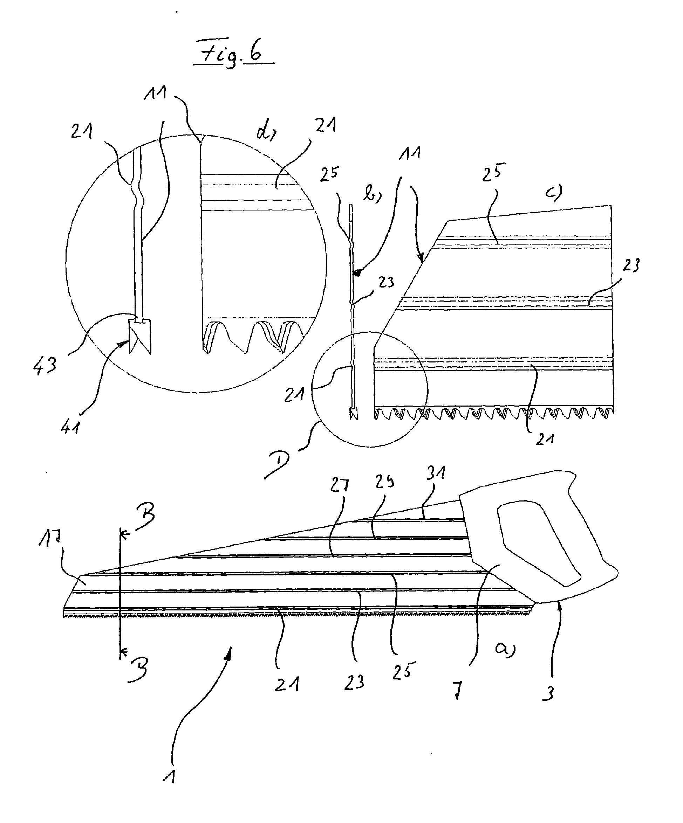

Das Sägeblatt 11 gemäß Figur 6 unterscheidet sich von dem gemäß Figur 1 dadurch, daß die Sägezahnreihe durch einen Hartmetallzahnreihenaufsatz 41 gebildet ist, der an einem Längsrand 43 des Sägeblatts 11 aufgesetzt und verschweißt ist. Die Breite des Aufsatzes 41 gibt etwa die Breite der Schnittfuge an, die geringfügig größer als die fiktive Stärke des Sägeblatts 11 ist.

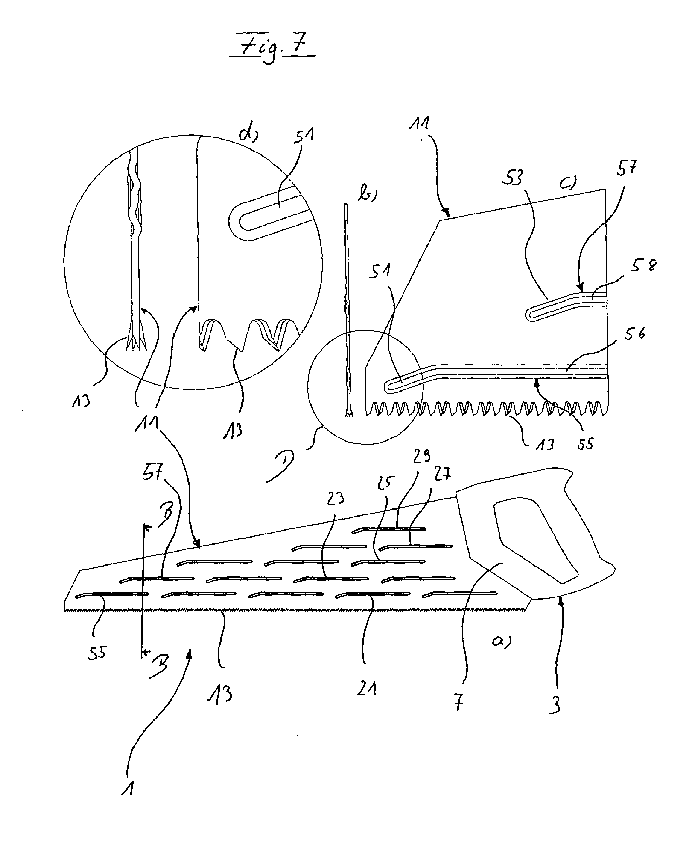

In Figur 7 ist eine siebte alternative Ausführung der erfindungsgemäßen Handsäge 1 dargestellt, die sich von der gemäß Figur 5 dadurch unterscheidet, daß das dem Endabschnitt 17 des Sägeblatts 11 zugewandte Ende 51, 53 von Profilrippenabschnitten 55, 57 der ersten und zweiten Profilrippe 21, 23 hin zur Sägezahnreihe 13 abgeknickt verläuft. Die geneigten Enden 51, 53 können mit den Innenwänden der Schnittfuge des Werkstücks in Eingriff gelangen, um das Sägeblatt 11 je nach Betätigungsrichtung aus der Schnittfuge anzuheben oder stärker in den Schnittfugenboden einzudrücken. Das kürzere Profilende 51, 53 erstreckt sich im wesentlichen geradlinig in einem Winkel von weniger als etwa 45° zur Sägezahnreihe 13 und geht in den geradlinigen, längeren Profilrippenteilabschnitt 56, 58 über, der sich parallel zur Sägezahnreihe 13 erstreckt.

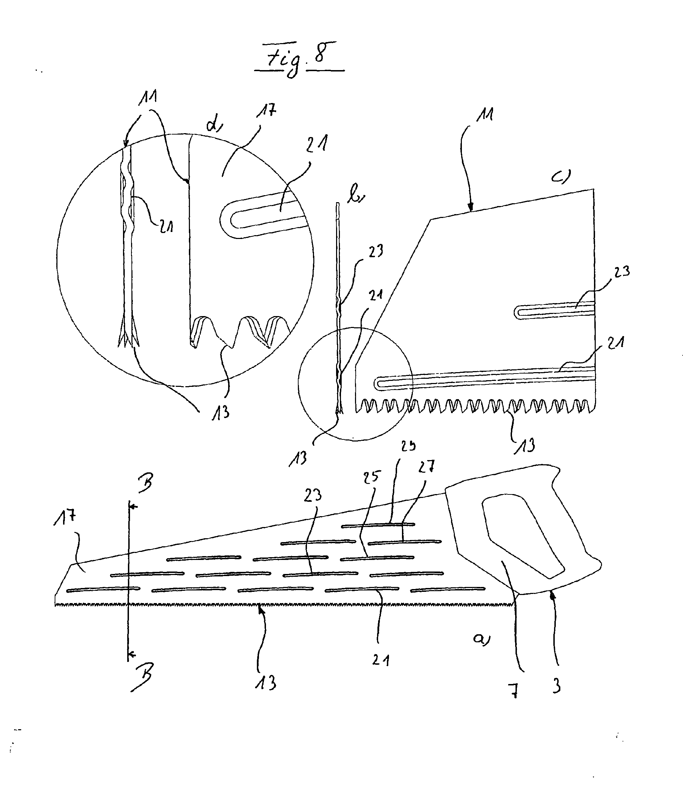

Die Ausführung gemäß Figur 8 unterscheidet sich von der gemäß Figur 5 dadurch, daß die gleichlangen Profilrippenabschnitte leicht gekrümmt sind, und zwar in einer im Hinblick auf die Sägezahnreihe 13 konvexe Weise.

Mit der in Figur 8 gezeigten Ausführung ist es möglich, ein allmähliches Ansteigen und Absenken der zusätzlichen Vertikalkräfte durch Eingriff der Profilrippen 21 bis 31 im Werkstück hervorzurufen.

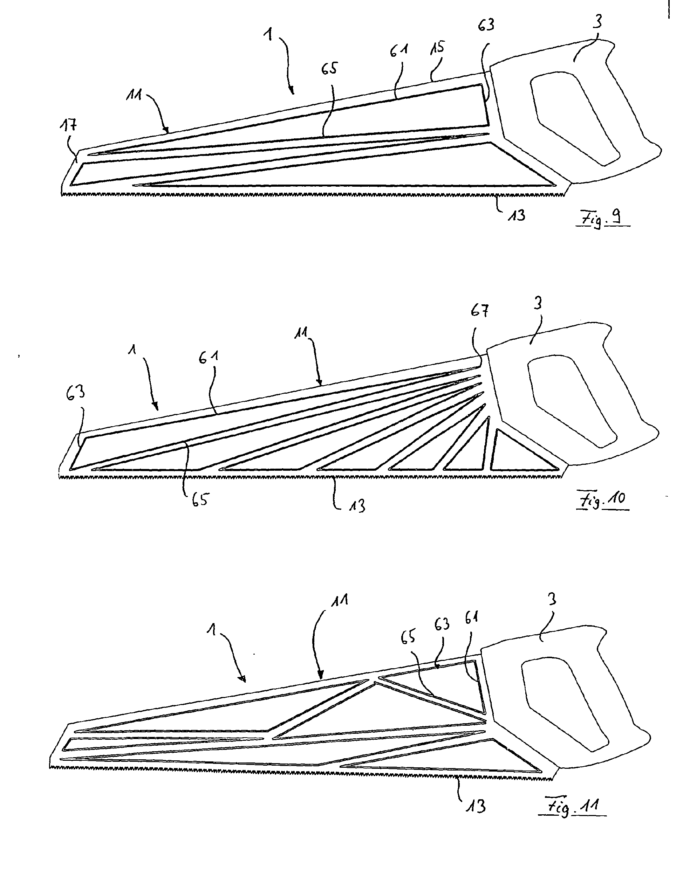

In Figur 9 ist eine Handsäge in einer weiteren Ausführung gezeigt, wobei für identische oder gleiche Bestandteile der Handsäge dieselben Bezugsziffern verwendet sind, um die Lesbarkeit der Figurenbeschreibung zu erleichtern.

Die Handsäge 1 gemäß Figur 9 hat am Sägeblatt 11 drei Profilierungen, die durch geradlinige Profilrippen 61 bis 65 jeweils eine dreieckige Profilrippenanordnung bilden, wobei bei zwei dreieckigen Profilrippenanordnungen Ecken mit dem spitzesten Winkel hin zum Endbereich 17 weisen, während bei einer Profilrippenanordnung der Eckbereich mit spitzestem Winkel hin zum Handgriff 3 weist. Die dreieckige Profilrippenanordnung benachbart der Sägezahnreihe 13 hat eine zur Sägezahnreihe 13 parallele Längsseite. Auch die dem Längsrand 15 benachbarte dreieckige Profilrippenanordnung hat eine zum Längsrand 15 parallele Längsseite.

Die dreieckigen Profilrippenanordnungen sind im wesentlichen in einem gleichen Abstand zueinander und in einem gleichen Abstand zu den Begrenzungsrändern des Sägeblatts 11 angeordnet.

In Figur 10 ist eine weitere bevorzugte Ausführung der erfindungsgemäßen Handsäge 1 dargestellt, wobei zur besseren Lesbarkeit der Figurenbeschreibung identische Bezugszeichen verwendet werden.

Das Sägeblatt 11 hat sieben Profilierungen, die als dreieckige Profilrippenanordnung gebildet ist. Jede Profilrippenanordnung hat miteinander verbundene Profilrippen 61 bis 65. Jede dreieckige Profilrippenanordnung hat eine zum Handgriff 3 weisende Ecke 67, an welcher für die meisten dreieckigen Profilrippenanordnungen der spitzeste Winkel des Dreiecks ausgebildet ist. Die Profilrippenanordnungen haben im wesentlichen einen konstanten Abstand zueinander und zu den Begrenzungsrändern des Sägeblatts 11.

In Figur 11 ist ein Sägeblatt 11 dargestellt, bei dem identische Bezugszeichen wie oben verwendet werden und das sechs dreieckige Profilrippenanordnungen aufweist, die durch Profilrippen 61 bis 65 gebildet sind. Die dreieckigen Profilrippenanordnungen sind derart zueinander positioniert, dass eine Art Fachwerkstruktur am Sägeblatt 11 gebildet ist. Die dreieckigen Profilrippenanordnungen sind zueinander in einem gleichmäßigen Abstand sowie zu den Begrenzungsrändern des Sägeblatts 11 angeordnet.

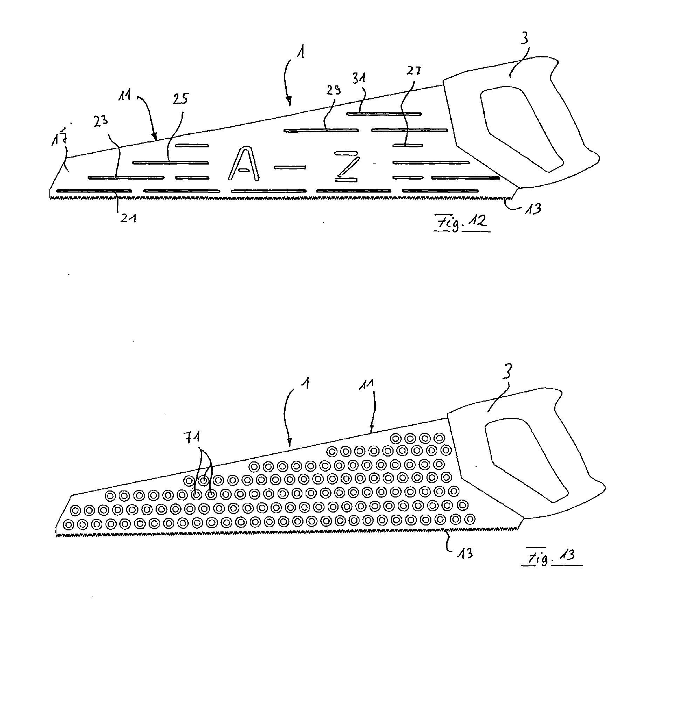

Figur 12 zeigt eine Handsäge 1 ähnlich zu der gemäß Figur 5a, wobei im wesentlichen in der Mitte des Sägeblatts 11 anstatt einiger geradliniger Profilrippen 23, 25 und 27 bestimmte Profilrippenanordnungen gebildet sind, die zur Darstellung wenigstens eines Buchstabens gruppiert sind.

In Figur 13 ist eine weitere Ausführung einer Handsäge 1 dargestellt, wobei die mehreren Profilierungen durch Profilringe 71 gebildet sind. Die Profilringe 7 sind in sieben Reihen angeordnet, wobei in jeder Reihe wenigstens vier Profilringe 71 liegen. Jede Profilreihe liegt parallel zur Sägezahnreihe 13.

Die Profilringe 71 können als zu einer Ringstruktur geformte Profilrippen angesehen werden.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Handsäge
- 3: Handgriff
- 5: Griffabschnitt
- 7: Montageabschnitt
- 11: Sägeblatt
- 13: Sägezahnreihe
- 15: Längsseite
- 17: Endbereich
- 21, 23, 25, 27, 29, 31: Profilrippen
- 35: Wellental
- 37: Wellenberg
- 41: Hartmetallzahnreihenaufsatz
- 43: Längsrand
- 51, 53: Profilenden
- 55, 57: Profilrippenabschnitt
- 56, 58: langer horizontaler Profilrippenteilabschnitt
- 61, 63, 65: Profilrippen
- 67: Ecke
- 71: Profilringe
- G: Grundflächenebene
- L: Längsrichtung
- h: Höhe
- s: Sägeblattstärke
- t: Breite
- u: Langabstand

## Patentansprüche

1. Sägeblatt für eine Handsäge (1) mit einem Handgriff (3), das zwei sich gegenüberliegende Seitenflächen, die zwei zueinander parallele Ebenen definieren und in einen freien Längsrand mit einer daran ausgebildeten Sägezahnreihe (13) münden, und eine über dessen blattgemäße, flächige Ausdehnung im wesentlichen gleichmäßige Stärke (s) aufweist, **dadurch gekennzeichnet, dass** das Sägeblatt (11) abschnittsweise mit wenigstens einer Profilierung versehen ist, die durch eine Erhebung und/oder Vertiefung geformt ist, welche aus der jeweiligen Ebene der Seitenflächen vorsteht.

2. Sägeblatt nach Anspruch 1, **dadurch gekennzeichnet, dass** die Profilierung in deren Verlauf eine Sägeblattstärke aufweist, die der im Wesentlichen gleichmäßigen Stärke des Sägeblatts (11) entspricht.

3. Sägeblatt nach Anspruch 1 oder 2, **dadurch gekennzeichnet, dass** der überwiegende Teil des Sägeblatts (11) profilierungsfrei gebildet ist.

4. Sägeblatt nach einem der vorstehenden Ansprüche, **dadurch gekennzeichnet, dass** die Profilierung durch mehrere separate Profileinheiten gleicher Profilform gebildet ist.

5. Sägeblatt nach einem der vorstehenden Ansprüche, **dadurch gekennzeichnet, dass** die Profilierung durch mehrere Profilringe gebildet ist, die insbesondere jeweils durch eine in das Sägeblatt (11) eingebrachte ringförmige Prägung realisiert sind, wobei insbesondere die mehreren Ringprofile in Reihen, insbesondere mehr als drei Profilringreihen, von mehr als drei Profilringen gruppiert sind, welche Reihen zur Sägezahnreihe (13) parallel sind.

6. Sägeblatt nach einem der vorstehenden Ansprüche, **dadurch gekennzeichnet, dass** die wenigstens eine Profilierung durch eine Profilrippe (21 bis 31) insbesondere mit einer zumindest abschnittsweise im Wesentlichen parallel zur Sägezahnreihe (13) ausgerichtete Längserstreckungsrichtung in dem Sägeblatt (11) ausgebildet ist, wobei insbesondere das Sägeblatt (11) an der wenigstens einen Profilrippe (21 bis 31) die gleiche Blattstärke (s) wie an Blattabschnitten ohne eine Profilrippe aufweist.

7. Sägeblatt nach Anspruch 6, **dadurch gekennzeichnet, daß** die wenigstens eine Profilrippe (21 bis 31) in das Sägeblatt (11) eingeprägt ist.

8. Sägeblatt nach Anspruch 6 oder 7, **dadurch gekennzeichnet, dass** mehrere geradlinige Profilrippen mehrere Dreiecke definieren, die fachwerkartig zueinander angeordnet sind, wobei insbesondere die benachbarten, dreieckigen Profilrippenanordnungen jeweils eine zueinander parallele Seite aufweisen und/oder dreieckigen Profilrippenanordnungen in einem gleichmäßigen Abstand zueinander angeordnet sind.

9. Sägeblatt nach einem der vorstehenden Ansprüche, **dadurch gekennzeichnet, daß** die wenigstens eine Profilrippe (21 bis 31) im Querschnitt im wesentlichen eine Wellen- oder Stufenform aufweist, wobei insbesondere die Wellenform wenigstens eine sich über eine Grundflächenebene (G) des Sägeblatts (11) hinaus erstreckende Erhebung aufweist und/oder die Wellenform auf beiden Seitenflächen des Sägeblatts (11) eine Erhebung aufweist.

10. Sägeblatt nach einem der vorstehenden Ansprüche, **dadurch gekennzeichnet, daß** wenigstens eine Profilrippe (21 bis 31) gegenüber der Sägezahnreihe (13) derart insbesondere leicht geneigt ist, daß sie sich im Verlauf zu einem dem Handgriff (3) gegenüberliegenden freien Ende des Sägeblatts (11) der Sägezahnreihe (13) nähert oder entfernt.

11. Sägeblatt nach einem der vorstehenden Ansprüche, **dadurch gekennzeichnet, daß** wenigstens eine Profilrippe (21 bis 31) gegenüber der Sägezahnreihe (13) in einem Winkel von weniger als 10°, insbesondere 5°, geneigt ist.

12. Sägeblatt nach einem der vorstehenden Ansprüche, **dadurch gekennzeichnet, daß** mehrere, insbesondere zwei bis zehn, vorzugsweise fünf oder sechs, zueinander parallele Profilrippen (21 bis 31) in dem Sägeblatt (11) vorgesehen sind und/oder auf einer zur Sägezahnreihe (13) parallelen oder leicht geneigten Geraden mehrere in Reihe angeordnete Profilrippenabschnitte (55, 57) vorgesehen sind.

13. Sägeblatt nach einem der vorstehenden Ansprüche, **dadurch gekennzeichnet, daß** erste, vorzugsweise mehr als zwei oder drei, in Reihe angeordnete Profilrippenabschnitte (55) in Längsrichtung versetzt zu zweite in Reihe angeordnete Profilrippenabschnitte (57) positioniert sind, wobei insbesondere ein Versatz in Längsrichtung (L) im wesentlichen weniger als die Hälfte der Länge eines Profilrippenabschnitts (55, 57) ist.

14. Sägeblatt nach einem der vorstehenden Ansprüche, **dadurch gekennzeichnet, daß** wenigstens eine Profilrippe (21 bis 31) zumindest abschnittsweise geradlinig oder leicht gekrümmt ist.

15. Sägeblatt nach einem der vorstehenden Ansprüche, **dadurch gekennzeichnet, daß** wenigstens eine Profilrippe (21 bis 31) einen ersten Abschnitt (56, 58) und einen zweiten in den ersten Abschnitt (56, 58) insbesondere kontinuierlich übergehenden Abschnitt (51, 53) aufweist, der gegenüber dem ersten Abschnitt (56, 58) geneigt ist, wobei insbesondere der erste Abschnitt (56, 58) im wesentlichen parallel zur Sägezahnreihe (13) verläuft und wenigstens doppelt so lang wie der zweite Abschnitt (51, 53) ist und/oder ein Neigungswinkel zwischen dem ersten und dem zweiten Abschnitt (51, 53, 56, 58) kleiner als etwa 45°, vorzugsweise etwa 30°, ist.
